(19) Europäisches Patentamt
European Patent Office
Office européen des brevets

(11) **EP 1 673 239 B1**

(12) **FASCICULE DE BREVET EUROPEEN**

(45) Date de publication et mention
de la délivrance du brevet:
**17.02.2010 Bulletin 2010/07**

(51) Int Cl.:
***B60C 23/04*** *(2006.01)*

(21) Numéro de dépôt: **04787477.1**

(22) Date de dépôt: **29.09.2004**

(86) Numéro de dépôt international:
**PCT/FR2004/002458**

(87) Numéro de publication internationale:
**WO 2005/032857 (14.04.2005 Gazette 2005/15)**

(54) **DISPOSITIF DE DETECTION DE FUITE ET DE SOUS-GONFLAGE DES PNEUMATIQUES DES ROUES DE VEHICULES AUTOMOBILES**

VORRICHTUNG ZUR ERFASSUNG VON LECKAGEN UND ZU NIEDRIGEM DRUCK VON AN KRAFTFAHRZEUGRÄDERN MONTIERTEN LUFTREIFEN

DEVICE FOR DETECTING LEAKS AND UNDERINFLATION OF PNEUMATIC TIRES MOUNTED ON MOTOR VEHICLE WHEELS

(84) Etats contractants désignés:
**AT BE BG CH CY CZ DE DK EE ES FI FR GB GR HU IE IT LI LU MC NL PL PT RO SE SI SK TR**

(30) Priorité: **30.09.2003 FR 0311439**

(43) Date de publication de la demande:
**28.06.2006 Bulletin 2006/26**

(73) Titulaire: **Johnson Controls Technology Company Holland, MI 49423 (US)**

(72) Inventeur: **WALRAET, David**
**F-78100 Saint-Germain En Laye (FR)**

(74) Mandataire: **Bloch, Gérard et al**
**Bloch & Bonnétat**
**23bis, rue de Turin**
**75008 Paris (FR)**

(56) Documents cités:
**US-A1- 2003 074 961**

**Description**

L'invention concerne tout d'abord les dispositifs de fuite, et notamment les dispositifs de détection de la crevaison des pneumatiques des roues de véhicules automobiles et, plus précisément le calcul du débit de fuite de ces pneumatiques.

Les dispositifs de détection peuvent être intégrés dans des calculateurs d'habitacle ou plus spécifiquement dans des boîtiers TPMS (tyre pressure measurement system).

Un boîtier TPMS collecte les informations de pression P et de température T du gaz contenu dans un pneumatique grâce à des capteurs et à un émetteur radio, généralement solidaires de la jante de la roue. Un récepteur radio disposé dans le boîtier permet de recevoir périodiquement une trame de données représentatives de la pression et de la température.

La période de collecte des trames de données issues de chaque roue est, en principe, l'inverse de la fréquence théorique d'émission des trames par les émetteurs qui est déterminée par le calculateur d'habitacle en fonction d'un état de fonctionnement du véhicule (arrêt, roulage).

Pour détecter une fuite, on peut calculer son débit à partir de l'évolution de la pression, d'une trame à l'autre, à la fréquence théorique ci-dessus, c'est-à-dire que l'on calcule le débit à partir de l'écart de pression enregistré sur le temps théorique.

Cette détection n'est cependant pas idéale.

En effet, d'une part, la température de la jante, donc du gaz contenu dans le pneumatique, peut varier de façon importante, par exemple lors d'un coup de frein, ce qui provoque une variation de la pression et une variation du débit calculé pouvant être interprétée à tort comme une fuite. En effet, la compensation thermique, même si elle est appliquée, n'est pas immédiatement répercutée, étant donné l'importance du temps de réponse d'un capteur de température, plus grande que celle d'un capteur de pression.

D'autre part, le temps entre deux trames peut ne pas être constant:

1) il peut être diminué volontairement, par exemple si la surveillance de la pression des pneumatiques demande à être accrue, auquel cas le débit calculé diminue avec le temps entre deux trames,

2) il peut augmenter involontairement en cas de perte de trame provoquée par une mauvaise liaison radio. Le débit calculé peut alors doubler, tripler etc., à l'insu du boîtier TPMS, qui ne peut donc appliquer la moindre correction.

On connaît des algorithmes mathématiques de lissage des données de pression et de température pour atténuer les conséquences de ces sources d'erreurs. Cette solution n'évite pas un retard de détection de crevaison avérée, ni une détection intempestive, ce qui peut être préjudiciable pour la sécurité du conducteur et des passagers du véhicule.

Un dispositif ayant les caractéristiques du préambule de la revendication 1 est connu du document US-A-2003 0 074 961.

La demanderesse s'est saisie du problème et propose, pour le résoudre, un dispositif de détection de fuite dans un pneumatique d'une roue de véhicule automobile, comportant des moyens de mesure de la pression du gaz contenu dans le pneumatique, des moyens de collecte des données de mesure de pression et des moyens de calcul de la dérive de pression entre deux instants de collecte des données de mesure, dispositif caractérisé par le fait qu'il comporte des moyens pour horodater la collecte des données de mesure et calculer la dérive de pression entre des instants de collecte horodatés.

Faisant fi des solutions économiques, la demanderesse a donc osé introduire des moyens supplémentaires dans le but d'augmenter la sécurité, suivant une solution a priori plus logique, mais qui avait été écartée.

Les moyens pour horodater la collecte des données de mesure permettent de calculer plus exactement le débit de fuite d'air, quelle que soit la fréquence de collecte des données de mesure et quelles que soient les conditions de transmission des trames radio.

De préférence, les moyens de calcul sont agencés pour calculer une dérive de pression compensée thermiquement.

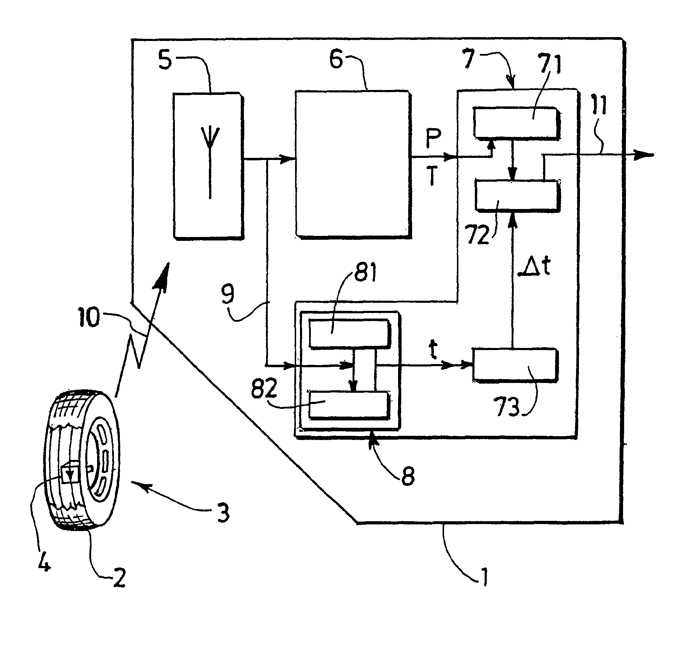

L'invention sera mieux comprise à l'aide de la description suivante d'une forme de réalisation du dispositif de l'invention et de la figure unique en annexe représentant un schéma par blocs fonctionnels du dispositif.

Un dispositif 1 de détection de fuite et, plus couramment, de crevaison d'un pneumatique 2 d'une roue 3 d'un véhicule automobile (non représenté) reçoit périodiquement, par une liaison radio 10, des trames de données parmi lesquelles la pression instantanée P du gaz contenu dans le pneumatique et éventuellement sa température T. Les grandeurs P et T sont mesurées par des capteurs (non représentés) dans un boîtier 4 fixé sur la jante ou sur la valve de la roue 3, à l'intérieur du pneumatique 2. C'est le boîtier 4, également équipé d'un émetteur (non représenté), qui émet les trames de données déjà évoquées ci-dessus.

Le dispositif de détection 1 comporte des moyens de collecte des trames de données de mesure issues du boîtier 4 : un récepteur 5 de réception des signaux radio 10, les transformant en signaux électriques analogiques, et un démodulateur 6 transformant ces signaux analogiques en signaux numériques puis en données numériques, dont la pression P et la température T du gaz dans le pneumatique.

Le dispositif 1 comporte également, en sortie du démodulateur 6, des moyens 7 de calcul, ici un microprocesseur, pour, à partir des données P et T transmises, calculer une éventuelle fuite. Le calcul de fuite est effectué par un module 71, calcul lancé chaque fois qu'un couple de données (P, T) est disponible en sortie du démodulateur 6. Un module 72 de détection de dérive de pression fournit à l'utilisateur une information de détection de crevaison, ou de fuite, par la sortie 11, à partir des informations délivrées par le module 72 et un module 73, en sortie d'un module 8, de calcul d'écart de temps entre deux couples successifs de données. Le module 8 est un module de datation qui comporte une horloge 81 et une mémoire 82, pour horodater la réception des données de mesure, commandée par le récepteur 5 grâce à un système d'interruption 9. Les modules 73 et 8 sont ici intégrés au microprocesseur 7.

Le fonctionnement du dispositif de détection va maintenant être décrit.

Quand le récepteur 5 reçoit une trame $\Theta i$ contenant les données Pi et Ti, il émet un signal d'interruption 9 commandant le module de datation 8, ce qui déclenche la mémorisation, dans la mémoire 82, de l'instant ti de l'horloge 81, correspondant à la réception de la trame. Il transmet ensuite la trame $\Theta i$ au démodulateur 6 qui en extrait les données (Ti, Pi) et les transmet au microprocesseur 7. Le microprocesseur 7, dès réception du couple de données (Ti, Pi), lit l'instant ti disponible dans la mémoire 82, déjà présent grâce au système d'interruption 9.

A la trame suivante $\Theta i+1$, le microprocesseur obtent de même (Ti+1, Pi+1) et ti+1.

Le module de calcul d'écarts 73 calcule :

$$\Delta t = t_{i+1} - t_i$$

Le module de calcul de fuite 71 calcule:

$$\Delta P = P_{i+1} - P_i$$

Le module de détection 72 calcule ensuite le débit de fuite par la formule donnant la dérive de pression :

$$D_p = \Delta P \ / \Delta t$$

et compare Dp à un seuil $S_p$ de détection de crevaison ou de fuite au delà duquel une alarme est émise sur la sortie 11 du microprocesseur 7.

Mais la relation $\Delta P / \Delta t$ est, pour ainsi dire, une vitesse de variation de pression alors qu'on souhaite appréhender une variation de quantité de gaz. Un pneumatique n'est toutefois pas isotherme ; il se peut parfaitement qu'il y ait variation de pression sans qu'il n'y ait variation de quantité de gaz. Or, il est tout aussi important de détecter une fuite quand elle surgit que de ne pas en détecter quand il n'y en a pas. C'est dans ces conditions que la demanderesse a jugé préférable d'intégrer la température dans les calculs proposés pour pallier la situation évoquée ci-dessus.

Dans la relation:

$$PV = nRT \qquad\qquad (1)$$

prise en compte dans les calculs ci-dessus, avec, pour hypothèses, que l'intérieur du pneumatique contient un mélange de gaz parfaits et que son volume intérieur est constant,
P est la constante des gaz parfaits et
n, représentant le nombre de moles, est également une constante s'il n'y a pas de fuite.

Un seuil de détection est fourni par le manufacturier du pneumatique ou le constructeur du véhicule. Or, un tel seuil est fourni pour une température de référence Tref.

Si l'on veut donc en tenir compte, il faut compenser la pression mesurée par la température et considérer, non pas la pression mesurée Pm, mais la pression compensée Pc, liée à Pm, compte tenu de la relation (1) et des hypothèses y associées, par la relation (2)

$$\frac{Pm}{Tm} = \frac{Pc}{Tref} \qquad (2)$$

dans laquelle Tm est la température mesurée en même temps que Pm, à l'intérieur du pneumatique.

Il en résulte la relation (3)

$$Pc = Pm \; \frac{Tref}{Tm} \qquad (3)$$

Et c'est à partir de la valeur de Pc, qu'on décidera, si c'est le cas, qu'un seuil est franchi et qu'une alarme doit être émise.

Cependant, dans la relation (1), la pression P est une pression absolue, exprimée en pascals ou en bars, de même que T est une température absolue, exprimée en degrés Kelvin.

Quand on mesure la pression d'un pneumatique, aussi bien par le boîtier 4 qu'à une station service, on mesure une pression relative. Quand on mesure 0 bar, la pression absolue est en réalité de 1,014 bars.

Ainsi, si la température de mesure est par exemple de 20°Celcius, la relation (3) doit être corrigée pour devenir la relation (4).

$$Pc = (Pm + 1,014) \frac{Tref}{Tm} - 1,014 \qquad (4)$$

dans laquelle Pc et Pm sont des pressions relatives, les températures Tref et Tm étant exprimées en degrés Kelvin.

Naturellement, et au-delà de la détection de fuite, les considérations développées ci-dessus s'appliquent tout aussi bien à la détection du sous-gonflage d'un pneumatique, la relation (4) pouvant être utilisée pour comparer la pression compensée à une pluralité de seuils de sous-gonflage. On notera que la crevaison peut-être assimilée à un sous-gonflage.

Dans ces conditions, les moyens de calcul (7) sont naturellement agencés pour mettre en oeuvre les relations présentées ci-dessus.

Il peut être également prévu une alarme émettant un signal sur commande de la pression compensée, qu'il s'agisse d'une détection de fuite ou d'une détection de sous-gonflage.

**Revendications**

1. Dispositif (1) de détection de fuite dans un pneumatique (2) d'une roue (3) de véhicule automobile, comportant des moyens (4) de mesure de la pression du gaz contenu dans le pneumatique (2), des moyens (4, 5, 6) de collecte des données de mesure de pression et des moyens (7) de calcul de la dérive de pression entre deux instants de collecte de données de mesure, dispositif **caractérisé en ce qu'**il comporte des moyens de datation (8, 9) pour horodater la collecte des données de mesure et **en ce que** lesdits moyens de calcul (7) sont aptes à calculer la dérive de pression entre des instants de collecte horodatés.

2. Dispositif selon la revendication 1, dans lequel il est prévu un module (73) de calcul d'écarts de datation entre les données de mesure successives.

3. Dispositif selon l'une des revendications 1 et 2, dans lequel les moyens de collecte de données sont agencés pour émettre un signal (9) d'interruption des moyens (8) de datation pour déclencher la mémorisation (82) de l'instant de réception des données de mesure.

4. Dispositif selon l'une des revendications 1 à 3, dans lequel il est prévu des moyens (4) de mesure de la température du gaz contenu dans le pneumatique, les moyens de collecte (4, 5, 6) sont agencés pour collecter également la mesure de température et les moyens de datation et de calcul (7, 8) sont agencés pour compenser la mesure de pression par la température.

**5.** Dispositif selon la revendication 4, dans lequel les moyens de calcul (7, 8) sont agencés pour établir la relation

$$Pc = (Pm + 1{,}014)\frac{Tref}{Tm} - 1{,}014$$

dans laquelle Pc et Pm sont des pressions relatives, les températures Tref et Tm étant exprimées en degrés Kelvin.

**6.** Dispositif selon l'une des revendications 4 et 5, dans lequel il est prévu des moyens pour émettre un signal d'alarme commandé par la pression compensée.

**Claims**

**1.** A device (1) for detecting leaks in a pneumatic tire (2) of a wheel (3) of an automotive vehicle, including means (4) for measuring the pressure of the gas contained in the pneumatic tire (2), means (4, 5, 6) for collecting pressure measurement data and means (7) for calculating pressure drift between two measurement data collecting time points, **characterised in that** it includes dating means (8, 9) for time stamping the measurement data collecting and **in that** said calculating means (7) are able to calculate pressure drift between time stamped collecting time points.

**2.** The device according to claim 1, wherein a module (73) for calculating dating deviations between the consecutive measurement data is provided.

**3.** The device according of any of claims 1 and 2, wherein the data collecting means are arranged to emit a signal (9) for turning off the dating means (8) to trigger storing (82) of the measurement data receiving time point.

**4.** The device according to any of claims 1 to 3, wherein means (4) for measuring the temperature of the gas containing in said pneumatic tire are provided, the collecting means (4, 5, 6) are also arranged to collect the temperature measurement and the dating and calculating means (7, 8) are arranged to compensate for the pressure measurement by temperature.

**5.** The device according to claim 4, wherein the calculating means (7, 8) are arranged to set the relationship

$$Pc = (Pm + 1.014)\frac{Tref}{Tm} - 1.014$$

wherein Pc and Pm are relative pressures, the temperatures Tref and Tm being expressed in Kelvin degrees.

**6.** The device according to any of claims 4 and 5, wherein means for emitting a warning signal controlled by compensated pressure are provided.

**Patentansprüche**

**1.** Vorrichtung (1) zur Erfassung von Leckagen in einem Reifen (2) eines Kraftfahrzeugrades (3), umfassend Mittel (4) zum Messen des im Reifen (2) enthaltenen Gasdrucks, Mittel (4, 5, 6) zum Erheben von Druckmessdaten und Mittel (7) zum Berechnen der Druckabweichung zwischen zwei Erhebungszeitpunkten von Messdaten, **dadurch gekennzeichnet, dass** sie Datierungsmittel (8, 9) umfasst, um die Messdatenerhebung mit Datums- und Zeitangaben zu versehen, und **dadurch**, dass die Mittel zur Berechnen (7) imstande sind, die Druckabweichung zwischen mit Datums- und Zeitangaben versehenen Erhebungszeitpunkten zu berechnen.

**2.** Vorrichtung nach Anspruch 1, wobei ein Modul (73) zum Berechnen der Datierungsabstände zwischen den aufeinander folgenden Messdaten vorgesehen ist.

**3.** Vorrichtung nach einem der Ansprüche 1 und 2, wobei die Mittel zur Datenerhebung angeordnet sind, um ein Signal (9) zum Unterbrechen der Datierungsmittel (8) auszusenden, um die Speicherung (82) des Empfangszeitpunktes der Messdaten auszulösen.

**4.** Vorrichtung nach einem der Ansprüche 1 bis 3, wobei Mittel (4) zum Messen der Temperatur des im Reifen enthaltenen Gases vorgesehen sind, wobei die Erhebungsmittel (4, 5, 6) angeordnet sind, um ebenfalls die Temperaturmessung zu erheben, und wobei die Datierungsmittel und die Mittel zum Berechnen (7, 8) angeordnet sind, um die Druckmessung durch die Temperatur zu kompensieren.

**5.** Vorrichtung nach Anspruch 4, wobei die Mittel zum Berechnen (7, 8) angeordnet sind, um folgendes Verhältnis aufzustellen

$$Pc = (Pm + 1,014)\frac{Tref}{Tm} - 1,014$$

wobei Pc und Pm relative Drucke und die Temperaturen Tref und Tm in Grad Kelvin angegeben sind.

**6.** Vorrichtung nach einem der Ansprüche 4 und 5, wobei Mittel zum Aussenden eines Alarmsignals vorgesehen sind, das vom kompensierten Druck gesteuert wird.

## RÉFÉRENCES CITÉES DANS LA DESCRIPTION

**Documents brevets cités dans la description**

- US 20030074961 A